# EUROPÄISCHE PATENTANMELDUNG

(11) **EP 2 141 789 A2**
(43) Veröffentlichungstag der Anmeldung: **06.01.2010**
(21) Anmeldenummer: 09100348.3
(22) Anmeldetag: 26.06.2009
(51) Int. Cl.: H02M 3/00, H02J 7/00

(54) **Steuergerät zur Absicherung eines Ausfalls eines Spannungswandlers in Kraftfahrzeugen**

(30) Priorität: 02.07.2008 DE 102008031270
(71) Anmelder: Continental Automotive GmbH, 30165 Hannover (DE)
(72) Erfinder: Hellwig, Hans-Peter, 93128, Regenstauf (DE); Schumann, Daniel, 93138, Lappersdorf/Baiern (DE)

(57) **Zusammenfassung**

Die Erfindung betrifft ein Steuergerät (6) umfassend wenigstens
- einen Spannungswandler (2), der eine Eingangsspannung (Vin) nach oben oder nach unten zu einer Ausgangsspannung (Vout) wandeln kann, und
- eine Überwachungseinrichtung (5), die überwacht, ob Signale in Abhängigkeit von der Funktionsfähigkeit des Spannungswandlers (2) empfangen werden,
**dadurch gekennzeichnet, dass** das Steuergerät (6) ein Schaltelement (4) umfasst, das durch die Überwachungseinrichtung (5) derart angesteuert wird, dass das Schaltelement (4) die Eingangsspannung (Vin) direkt zur Ausgangsspannung (Vout) durchschaltet, wenn die Überwachungseinrichtung (5) kein Signal empfängt.

## Beschreibung

Die Erfindung betrifft ein Steuergerät zur Absicherung eines Ausfalls einer Schaltvorrichtung bei Spannungswandlern in Kraftfahrzeugen.

Beim Starten von Kraftfahrzeugen erfolgt eine starke Verringerung der Spannung im Bordnetz. Das kann bis zu 30 % der Nominalspannung sein. Diese Verringerung bzw. Einbruch kann zu Fehlern oder zum Aussetzen von elektronischen Geräten im Fahrzeug führen. In Kraftfahrzeugen, in denen sehr viele Startvorgänge durchgeführt werden, z.B. bei Fahrzeugen mit Start-Stopp-Funktion, werden Spannungswandler zur Spannungsstabilisierung eingesetzt. Diese Spannungswandler haben die Aufgabe, die Spannung für ausgewählte Geräte unter allen Umständen konstant zu halten. Diese Geräte sind direkt am Ausgang des Spannungswandlers angeschlossen. Das Steuergerät, auf dem sich neben dem Spannungswandler auch ein niederohmiges Überbrückungselement befindet, ermöglicht die Versorgung im Normalbetrieb, d.h. wenn nicht gewandelt wird. Ein Ausfall des Überbrückungselements oder des Spannungswandlers könnte dazu führen, dass angeschlossene Geräte mit keiner Spannung mehr versorgt werden. Das ist insbesondere bei sicherheitsrelevanten Verbrauchern kritisch.

Der vorliegenden Erfindung liegt daher die Aufgabe zugrunde, eine Anordnung bereitzustellen, die eine hohe Sicherheit für die Spannungsversorgung für Verbraucher gewährleistet.

Diese Aufgabe wird erfindungsgemäß durch ein Steuergerät mit den Merkmalen des Anspruches 1 gelöst. Vorteilhafte Aus- und Weiterbildungen, welche einzeln oder in Kombination miteinander eingesetzt werden können, sind Gegenstand der abhängigen Ansprüche.

Die Erfindung betrifft ein Steuergerät umfassend wenigstens einen Spannungswandler, der eine Eingangsspannung nach oben oder nach unten zu einer Ausgangsspannung wandeln kann, und eine Überwachungseinrichtung, die überwacht, ob Signale in Abhängigkeit von der Funktionsfähigkeit des Spannungswandlers empfangen werden, wobei das Steuergerät ein Schaltelement umfasst, das durch die Überwachungseinrichtung derart angesteuert wird, dass das Schaltelement die Eingangsspannung direkt zur Ausgangsspannung durchschaltet, wenn die Überwachungseinrichtung kein Signal empfängt.

In einer bevorzugten Ausgestaltung der Erfindung umfasst das Steuergerät einen Mikrokontroller, der die Signale an die Überwachungseinrichtung sendet.

In einer weiteren bevorzugten Ausgestaltung der Erfindung umfasst das Steuergerät eine Widerstand-Kondensator-Einheit, die dem Schaltelement vorgeschaltet ist.

In einer weiteren bevorzugten Ausgestaltung der Erfindung umfasst das Steuergerät eine Schaltvorrichtung, welche durch den Mikrokontroller derart angesteuert wird, so dass bei Ausfall des Spannungswandlers die Schaltvorrichtung die an ihr anliegende Eingangsspannung zur Ausgangsspannung durchschaltet.

In einer weiteren bevorzugten Ausgestaltung der Erfindung umfasst das Schaltelement einen Transistor.

Die Erfindung betrifft ferner ein Kraftfahrzeug, umfassend das ein Steuergerät nach den vorherigen Ausgestaltungen.

Weitere Einzelheiten und Vorteile der Erfindung werden in Bezugnahme auf die beigefügte Figur erläutert.

### Darin zeigen schematisch:

- Fig. 1: ein Steuergerät 6;
- Fig. 2 1.: ein Steuergerät 6 mit einer Schaltungsvorrichtung
- Fig. 3: ein Kraftfahrzeug 12.

Bei der nachfolgenden Beschreibung einer bevorzugten Ausführungsform der vorliegenden Erfindung bezeichnen gleiche Bezugszeichen gleiche oder vergleichbare Komponenten.

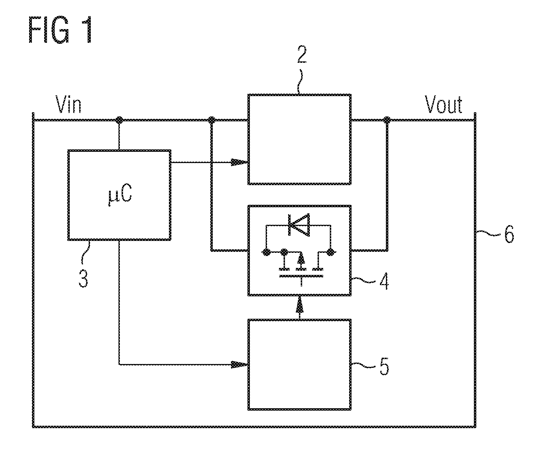

Figur 1 zeigt ein Steuergerät 6 mit einem Spannungswandler 2, einem Mikrokontroller 3, einem Schaltelement 4 und einer Überwachungseinrichtung 5. An dem Mikrokontroller 3 liegen die Signale einer Eingangsspannung Vin sowie einer Ausgangsspannung Vout an. Im Normalfall, das heißt wenn keine Störung vorliegt, und beispielsweise durch das Starten des Fahrzeugs ein Spannungsabfall erfolgt, wird durch den Spannungswandler 2 die vorhandene Spannung nach oben oder unten geregelt, so dass am Verbraucher die gewünschte Spannung, die Ausgangsspannung Vout anliegen kann. Wenn kein Spannungsabfall vorliegt, so schaltet der Spannungswandler 2, die Eingangsspannung Vin direkt an die Ausgangsspannung Vout durch. Der Mikrokontroller 3 überwacht die Funktionalität des Spannungswandlers 2. Wenn der Spannungswandler 2 nicht in Betrieb ist, liegt am Mikrokontroller 3 noch ein Restpotential als Ausgangspannung Vout an. Sollte dieses Potential nicht vorhanden sein, so erkennt der Mikrokontroller 3, dass der Spannungswandler 2 defekt ist und durch das Schaltelement 4 wird die Eingangsspannung Vin direkt an die Ausgangsspannung Vout durchgeschaltet. Dieser Schalter funktioniert unabhängig von der restlichen Logik, d.h. unabhängig von dem Spannungswandler 2 und dem Mikrokontroller 3.

Das Schaltelement 4 wird von einer Überwachungseinrichtung 5 angesteuert, die auch als Watch Dog bekannt ist. Die Überwachungseinrichtung 5 enthält einen logischen Baustein, der die Eingangsspannung Vin überwacht. Die Überwachungseinrichtung 5 wird in festgelegten Zeitabständen von einer logischen Schaltung, vom Mikrokontroller 3, mit Energie-Impulsen angesteuert. Solange diese Impulse regelmäßig an der Überwachungseinrichtung 5 eintreffen erfolgt keine Änderung. Die Überwachungseinrichtung 5 wird also im fehlerfreien Zustand ständig durch Impulse getriggert. Sendet der Mikrokontroller 3 die Impulse nicht mehr aus, beispielsweise weil dieser defekt ist, steuert die Überwachungseinrichtung 5 das Schaltelement 4 derart an, dass dieses die Eingangsspannung Vin direkt zur Ausgangsspannung Vout durchschaltet. Damit werden die Verbraucher zumindest mit der vorhandenen Ausgangsspannung Vout versorgt.

In der Überwachungseinrichtung 5 läuft dabei Folgendes ab: Ein dem Schaltelement 4 vorgeschaltetes Widerstands / Kondensator (RC)-Glied speichert die Energie der durch den Mikrokontroller 3 übertragenen Signale. Bleiben die Impulse aus, entlädt sich der Kondensator im RC Glied und der Transistor wird in Durchlassrichtung geschaltet. Das Schaltelement 4 wird geschlossen und damit die Versorgung nachgeschalteter Elemente gesichert. In diesem Fall ist nur eine direkte elektrische Verbindung von der Eingangsspannung Vin über das Schaltelement 4 zur Ausgangsspannung Vout vorhanden. Die anderen Bausteine, d.h. die Überwachungseinrichtung 5, der Mikrokontroller 3 und der Spannungswandler 2 üben keine Funktion mehr aus. Die Erfindung ermöglicht eine Absicherung von Komfort-Elektronikkomponenten. Die Verbraucher 12 werden somit zumindest mit der vorhandenen Eingangsspannung Vin versorgt.

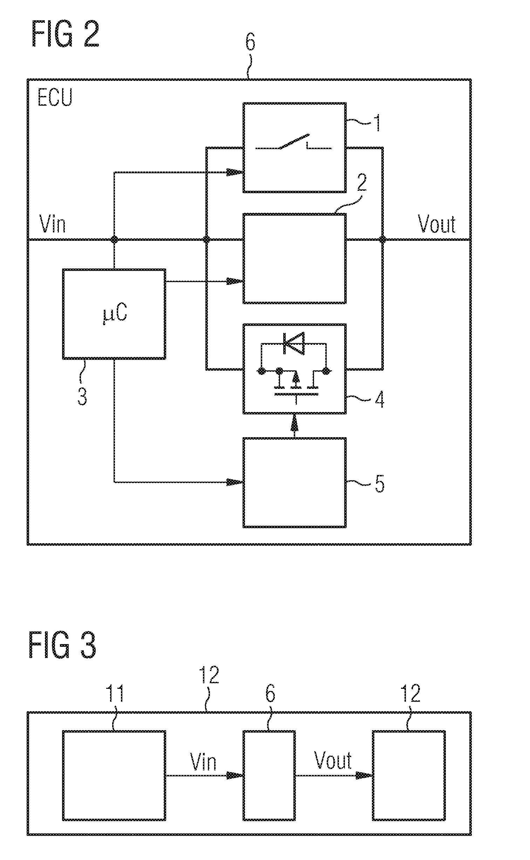

Figur 2 zeigt ein Steuergerät 6 mit einer Schaltungsvorrichtung 2. Das Steuergerät 6 ist analog dem Steuergerät aus Figur 1, abgesehen davon, dass diese eine zusätzliche Schaltvorrichtung 1 umfasst. Der Mikrokontroller 3 empfängt nun zusätzlich Kontrollsignale der Schaltvorrichtung 1, welche dem Mikrokontroller 3 anzeigen, ob die Schaltvorrichtung 1 funktioniert. Wenn die Eingangsspannung einem vorgegebenen Wert entspricht, ist die Schaltungsvorrichtung 1 derart geschaltet, dass über diese Schaltungsvorrichtung 1 die Eingangsspannung Vin an die Ausgangsspannung Vout durchgeschaltet wird. Die Schaltungsvorrichtung 1 kann beispielsweise als Relais ausgebildet sein. Wenn die Eingangsspannung Vin von einem vorgegebenen Wert abweicht wird durch den Mikrokontroller die Schaltungsvorrichtung 1 in einen Zustand geschalten, so dass die Schaltungsvorrichtung 1 geschlossen ist und die Eingangsspannung Vin durch den Spannungswandler 2 an die Ausgangsspannung Vout weitergegeben wird. Die Schaltungsvorrichtung 1 sendet in regelmäßigen Abständen ein Kontrollsignal an den Mikrokontroller 3, so dass der Mikrokontroller 3 erkennt, ob die Schaltungsvorrichtung 1 funktioniert. Für den Fall, dass die Schaltvorrichtung 1 ebenfalls defekt ist, oder die Funktion nicht benötigt wird, übernimmt das Schaltelement 4 die Aufgabe, zumindest die Eingangsspannung Vin an die Ausgangsspannung Vout durchzuschalten. Die Überwachungsvorrichtung 5, die kontinuierlich die Signale überwacht, steuert das Schaltelement 4 erst dann zum Durchschalten der Eingangsspannung Vin an die Ausgangsspannung Vout an, wenn die Signale nicht mehr an der Überwachungseinrichtung 5 anliegen. Das heißt wenn der Mikrokontroller 3 keine Signale an die Überwachungseinrichtung 5 sendet.

Figur 3 zeigt ein Kraftfahrzeug 12 mit einem Steuergerät 6, das in ein Bordnetz des Kraftfahrzeuges 12 mit Spannungsversorgung 11 und Verbraucher 12 integriert ist. Dabei wird die Spannung Vin der Spannungsquelle 11, z.B. die Batterie eines Kraftfahrzeug, in dem Steuergerät 6 entsprechend über einen Spannungswandler 2 oder andere Bauelemente an Verbraucher 12 weitergeleitet. Zu den Verbrauchern zählen beispielsweise Licht, Navigationsgerät, Radio und Hintergrundbeleuchtungen von Anzeigen.

Die vorliegende Erfindung eignet sich besonders für die Sicherstellung der Energieversorgung von Verbrauchern in Kraftfahrzeugen.

## Patentansprüche

1. Steuergerät (6) umfassend wenigstens
- einen Spannungswandler (2), der eine Eingangsspannung (Vin) nach oben oder nach unten zu einer Ausgangsspannung (Vout) wandeln kann, und
- eine Überwachungseinrichtung (5), die überwacht, ob Signale in Abhängigkeit von der Funktionsfähigkeit des Spannungswandlers (2) empfangen werden,
**dadurch gekennzeichnet, dass**
das Steuergerät (6) ein Schaltelement (4) umfasst, das durch die Überwachungseinrichtung (5) derart angesteuert wird, dass das Schaltelement (4) die Eingangsspannung (Vin) direkt zur Ausgangsspannung (Vout) durchschaltet, wenn die Überwachungseinrichtung (5) kein Signal empfängt.

2. Steuergerät (6) nach Anspruch 1, **dadurch gekennzeichnet, dass** das Steuergerät (6) einen Mikrokontroller (3) umfasst, der die Signale an die Überwachungseinrichtung (5) sendet.

3. Steuergerät (6) nach Anspruch 1 oder 2, **dadurch gekennzeichnet, dass** das Steuergerät (6) eine Widerstand-Kondensator-Einheit umfasst, die dem Schaltelement (4) vorgeschaltet ist.

4. Steuergerät (6) nach Anspruch 1 bis 3, **dadurch gekennzeichnet, dass** das Steuergerät (6) eine Schaltvorrichtung (1) umfasst, welche durch den Mikrokontroller (3) derart angesteuert wird, so dass bei Ausfall des Spannungswandlers (2) die Schaltvorrichtung (1) die an ihr anliegende Eingangsspannung (Vin) zur Ausgangsspannung (Vout) durchschaltet.

5. Steuergerät (6) nach einem der vorhergehenden Ansprüche, **dadurch gekennzeichnet, dass** das Schaltelement (4) einen Transistor umfasst.

6. Kraftfahrzeug (12), umfassend ein Steuergerät(6) nach einem der vorherigen Ansprüche, eine Spannungsversorgung (11) und Verbraucher (12).
